Europäisches Patentamt

European Patent Office

Office européen des brevets

(11) Publication number: **0 076 330**
**B1**

(12) **EUROPEAN PATENT SPECIFICATION**

(45) Date of publication of patent specification: **12.07.89**

(21) Application number: **82901020.6**

(22) Date of filing: **09.04.82**

(86) International application number:
**PCT/JP82/00118**

(87) International publication number:
**WO 82/03590 28.10.82 Gazette 82/26**

(51) Int. Cl.⁴: **B 23 Q 33/00**

(54) **COPY CONTROLLING SYSTEM.**

(30) Priority: **10.04.81 JP 54149/81**

(43) Date of publication of application:
**13.04.83 Bulletin 83/15**

(45) Publication of the grant of the patent:
**12.07.89 Bulletin 89/28**

(84) Designated Contracting States:
**DE FR GB**

(56) References cited:
**EP-A-0 015 650**
**EP-A-0 038 391**
**JP-A-55 058 954**
**JP-A-55 106 753**
**US-A-4 355 362**
**US-A-4 356 552**

(73) Proprietor: **FANUC LTD**
**3580, Shibokusa Aza-Komanba Oshino-mura**
**Minamitsuru-gun Yamanashi 401-05 (JP)**

(72) Inventor: **KOMIYA, Hidetsugu**
**1-17-20, Asahigaoka Hino-shi**
**Tokyo 191 (JP)**
Inventor: **YAMAZAKI, Etsuo**
**566-93, Shimoongata-cho Hachioji-shi**
**Tokyo 192-01 (JP)**

(74) Representative: **Billington, Lawrence Emlyn**
**et al**
**˙HASELTINE LAKE & CO Hazlitt House 28**
**Southampton Buildings Chancery Lane**
**London WC2A 1AT (GB)**

Courier Press, Leamington Spa, England.

## Description

The present invention relates to a copy or tracer control system.

Where arbitrary-direction tracing which permits feed at an arbitrary angle to the X- or Y-axis is carried out through the use of a combination tracer control-numerical control unit, it is general practice in the prior art to cut a workpiece while controlling the X-axis and the Y-axis by numerical control and the Z-axis by tracer control. That is to say, the prior art employs one-axis tracing and hence possesses the defects that sufficient cutting accuracy cannot be obtained, and that the cutting speed cannot be increased.

The present invention overcomes or reduces the abovesaid defects and has for its object to provide for increased cutting accuracy and cutting speed in arbitrary-direction tracing by a combination tracer control-numerical control unit.

EP—A—0015650 discloses a copy control system for tracing the profile of a master-model along a feed path in a freely selectable direction in an X—Y plane through the use of a tracer control unit which performs tracer control according to displacement signals from a tracer head when tracing a model surface with a stylus in order to cut a workpiece with a cutter, wherein the tracer control unit is provided with a first coordinate transformation circuit for producing a displacement component signal relative to the model in the direction of the feed path on the basis of displacement signals of the stylus from the tracer head in the X-axis and the Y-axis and digital signals indicating the direction of the feed path, and with a second coordinate transformation circuit for resolving, in accordance with said displacement component signal and with the digital signals indicating the direction of the feed path, a signal for controlling the feed rate along the feed path into signals for controlling drive means to determine the feed rates in the X-axis and the Y-axis.

According to the present invention there is provided in combination with the tracer control unit a numerical control unit operable to perform numerical control according to numerical information to cut the workpiece by the cutter, the numerical control unit being operable to define said freely selectable direction by producing said angle-indicating signals from the coordinates of any two consecutive digitised points defined on said plane and lying on said feed path, said numerical control unit comprising a controller for calculating said angle-indicating signals, a memory, and a reader operable to read a physical medium carrying numerical control information, wherein said numerical control information read by the reader is to include the coordinates of said two consecutive points, the system further comprising position detectors for detecting the actual positions along the X and Y axes, and wherein the controller is coupled to receive the value of the control signal for controlling the feed rate along the feed path and is operable to calculate periodically, from the value of this signal and from the elapsed time, the commanded positions along the X and Y axes; there being comparison means coupled to the position detectors and to the controller to receive the values of the actual and commanded positions and to calculate any error between them and to correct accordingly the velocity control signals along the X and Y axes, said commanded positions being supplied to said comparison means via respective simulators having a time function corresponding to the delay time of the associated drive system, thereby to compensate for the delay in the actual values of the commanded positions caused by said delay time.

For a better understanding of the invention and to show how it may be put into effect, reference will now be made by way of example to the accompanying drawings in which:

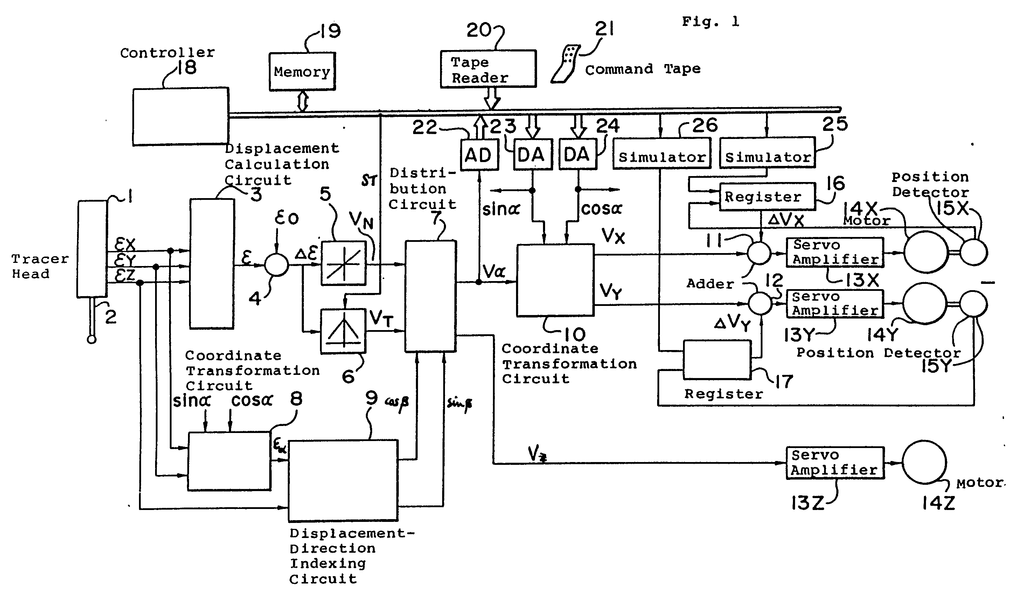

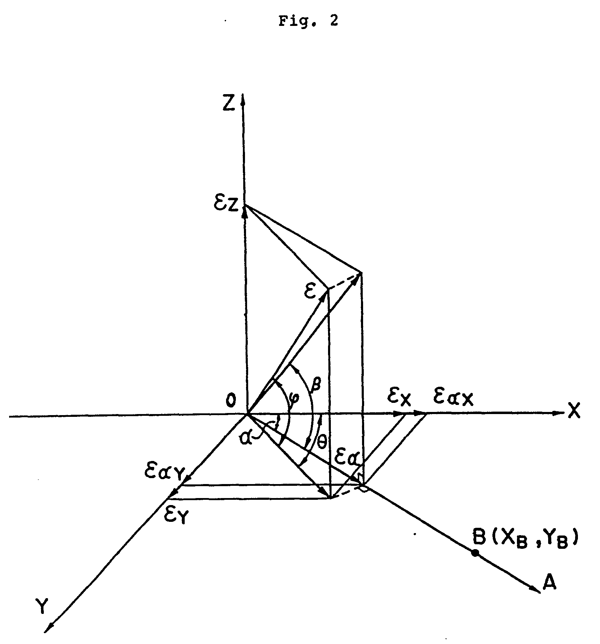

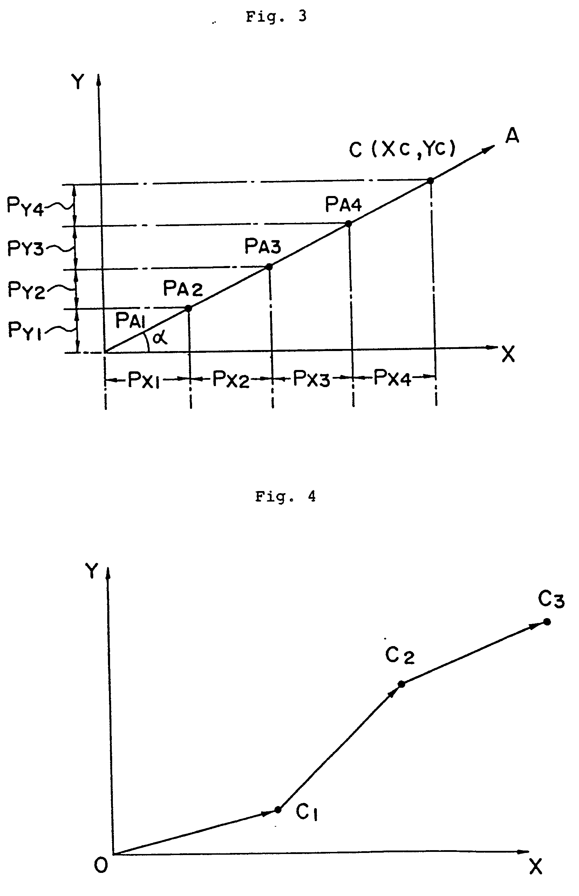

Figure 1 is a block diagram of apparatus embodying a system of the present invention; Fig. 2 is a diagram explanatory of the relationships of respective signal in terms of vectors; and Figs. 3 and 4 are diagrams explanatory of the described and illustrated system of the present invention.

The present invention will hereinafter be described in detail with respect of its preferred embodiment.

Fig. 1 is a block diagram of a copy or tracer control-numerical control unit embodying the system of the present invention. 1 is a tracer head, 2 a stylus, 3 a displacement calculation circuit, 4, 11 and 12 adders, 5 and 6 velocity calculation circuits, 7 a distribution circuit, 8 and 10 coordinate transformation circuits, 9 a displacement-direction indexing circuit, 13X, 13Y and 13Z servo amplifiers, 14X, 14Y and 14Z motors, 15X and 15Y position detectors, 16 and 17 registers, 18 a controller, 19 a memory, 20 a tape reader, 21 a command tape, 22 an AD converter, 23 and 24 DA converters, and 25 and 26 simulators.

Three differential transformers (not shown) corresponding to the X-, Y- and Z-axes, provided in the tracer head 1, are excited by an alternating current of a frequency f and, when the displace-ment vector $\vec{\varepsilon}$ of the stylus 2 contacting a model (not shown) is such as shown in Fig. 2, letting it be assumed that $2\pi ft=\omega t$, signals $\varepsilon_x$, $\varepsilon_y$ and $\varepsilon_z$ avail-able from the tracer head 1 are given as follows:

$$\varepsilon_x = \varepsilon \cos \psi \cos \theta \sin \omega t \qquad (1)$$

$$\varepsilon_y = \varepsilon \cos \psi \sin \theta \sin \omega t \qquad (2)$$

$$\varepsilon_z = \varepsilon \sin \psi \sin \omega t \qquad (3)$$

Now, consider the case of performing tracing from the origin O to a point B $(X_B, Y_B)$ along an axis A shown in Fig. 2. In this case, the coordinates $(X_B, Y_B$ of the point B are recorded as numerical information on the command tape 21.

Based on the numerical information of the command tape 21, that is, the coordinates of the point B, read out by the tape reader 20, the controller 18 conducts computations shown by the following equations (4) and (5) to obtain the sine and the cosine of the angle formed between the X-axis and the A-axis.

$$\sin \alpha = \frac{Y_B}{\sqrt{X_B{}^2 + Y_B{}^2}} \qquad (4)$$

$$\cos \alpha = \frac{X_B}{\sqrt{X_B{}^2 + Y_B{}^2}} \qquad (5)$$

The controller 18 applies a digital signal indicating the $\sin \alpha$ to the DA converter 23 and a digital signal indicating the $\cos \alpha$ to the DA converter 24. The DA converter 23 converts the digital signal indicating the $\sin \alpha$ into an analog signal and provides it to the coordinate transformation circuits 8 and 10, whereas the DA converter 24 converts the digital signal indicating the $\cos \alpha$ into an analog signal and provides it to the coordinate transformation circuits 8 and 10

Thereafter, the controller 18 causes the tracing to start. The displacement signals $\varepsilon_x$, $\varepsilon_y$ and $\varepsilon_z$ output from the tracer head 1 are provided to the displacement calculation circuit 3; at the same time, the displacement signals $\varepsilon_x$ and $\varepsilon_y$ are applied to the coordinate transformation circuit 8 and the displacement signal $\varepsilon_z$ is applied to the displacement-direction indexing circuit 9. The displacement calculation circuit 3 obtains a composite displacement

$$\varepsilon = \sqrt{\varepsilon_x{}^2 + \varepsilon_y{}^2 + \varepsilon_z{}^2}$$

and provides it to the adder 4, which in turn obtains a difference $\Delta\varepsilon$ between the composite displacement $\varepsilon$ and a reference displacement $\varepsilon_0$, and applies it to the velocity calculation circuits 5 and 6. The velocity calculation circuits 5 and 6 respectively obtain a normal velocity $V_N$ and a tangential velocity $V_T$ and provide them to the distribution circuit 7. The coordinate transformation circuit 8, supplied with the displacement signals $\varepsilon_x$, $\varepsilon_y$ and $\varepsilon_z$ and the analog signals indicating the $\sin \alpha$ and the $\cos \alpha$, outputs a displacement component signal $\varepsilon_\alpha$ in the direction of a feed path, given by the following equation (6), which signal is provided to the displacement-direction indexing circuit 9. Incidentally, as the coordinate transformation circuit 8, for instance, a coordinate transformer 22 set forth in EP—A—0015650 can be used.

$$\varepsilon_\alpha = \varepsilon_x \cos \alpha + \varepsilon_y \sin \alpha \qquad (6)$$

Based on the signal $\varepsilon_\alpha$ from the coordinate transformation circuit 8 and the displacement signal $\varepsilon_z$ from the tracer head 1, the displacement-direction indexing circuit 9 indexes an angle $\beta$ in the A—Z plane, obtaining a cosine signal $\cos \beta \sin \omega t$ and a sine signal $\sin \beta \sin \omega t$ in the direction of displacement. The cosine signal $\cos \beta \sin \omega t$ and the sine signal $\sin \beta \sin \omega t$ and the normal velocity signal $V_N$ and the tangential velocity signal $V_T$ output from the velocity calculation circuits 5 and 6 are applied to the distribution circuit 7 and, for example, by a multiplier circuit, a combiner circuit and so on in the distribution circuit 7, control signals of a velocity $V_\alpha$ in the A-axis direction and a velocity $V_Z$ in the Z-axis direction are distributed. The control signal of the velocity $V_Z$ in the Z-axis direction is applied to the servo amplifier 13Z, by the output from which the motor 14Z is driven.

The control signal of the velocity $V_\alpha$ in the A-axis direction is applied to the coordinate transformation circuit 10 and the AD converter 22. The coordinate transformation circuit 10 is to multiply the control signal of the velocity $V_\alpha$ in the A-axis direction and the analog signals indicating the $\sin \alpha$ and the $\cos \alpha$ provided from the DA converters 23 and 24 and, accordingly, the coordinate transformation circuit 10 yield control signals of a velocity $V_X$ in the X-axis direction and a velocity $V_Y$ in the Y-axis direction, which are supplied to the servo amplifiers 13X and 13Y and, by their outputs, the motors 14X and 14Y are driven to perform a feed in the A-axis direction. Incidentally, as the coordinate transformation circuit 10, a coordinate transformer 23 shown in EP—A—0015650 can be employed.

As described above, when performing variable-direction tracing through using the combination tracer control-numerical control unit, the feed in the A-axis direction is not controlled directly according to the numerical information, as in the conventional system, but the numerical information is used merely for determining the direction of feed and the feed control in the A-axis direction is also carried out by the tracer control, so that the cutting accuracy and the cutting speed can be increased.

Furthermore, in this embodiment, as described hereinbelow, the registers 16 and 17, the simulators 25 and 26 and the position detectors 15X and 15Y are provided, thereby to prevent that a deviation is caused in the direction of feed under the influence of an offset voltage or the like.

Now, consider the case of performing tracing from the origin O to a point C $(X_C, Y_C)$ along the A-axis as shown in Fig. 3. Let it be assumed, in this case, that the command tape 21 has recorded thereon the coordinates $(X_C, Y_C)$ of the point C.

The controller 18 samples, every constant time $\Delta T$, the control signal of the velocity $V_\alpha$ in the A-axis direction applied via the AD converter 22 from the distribution circuit 7 and conducts a computation shown by the following equation (7), obtaining the amount of movement $P_{An}$ in the A-axis direction every constant time $\Delta T$, where n is an integer.

$$P_{An} = V_A \cdot \Delta T \qquad (7)$$

Next, the controller 18 performs calculations of the following equations to obtain the amounts of movement $P_{Xn}$ and $P_{Yn}$ in the X-axis and the Y-axis direction every constant time $\Delta T$ and provides

them via the simulators 25 and 26 to the registers 16 and 17. In the following equations, n is an integer and α is an angle between the X-axis and the A-axis.

$$P_{Xn} = \frac{P_{An} \cdot X_C}{\sqrt{X_C{}^2 + Y_C{}^2}} = P_{An} \cdot \cos \alpha \quad (8)$$

$$P_{Yn} = \frac{P_{An} \, Y_C}{\sqrt{X_C{}^2 + Y_C{}^2}} = P_{An} \cdot \sin \alpha \quad (9)$$

To the other input terminals of the registers 16 and 17 are applied the results of detection by the position detectors 15X and 15Y and, in the case where the results of detection differ from the amounts of movement $P_{Xn}$ and $P_{Yn}$ in the X-axis and the Y-axis direction per unit time ΔT, applied via the simulators 25 and 26, the registers 16 and 17 respectively provide signals $\Delta V_x$ and $\Delta V_y$ corresponding to the differences to the adders 11 and 12, thus correcting commanded velocities in the X-axis and the Y-axis direction. The reason for which the differences between the amounts of movement $P_{Xn}$ and $P_{Yn}$ obtained by the controller 18 per unit time ΔT and the results of detection by the position detectors 15X and 15Y are not directly obtained, but the differences between the outputs of the simulators 25 and 26 and the outputs of the position detectors 15X and 15Y are obtained, is a result of taking into account the delay time of a drive system for the motor or a movable machine part. In other words, the results of detection by the position detectors 15X and 15Y are obtained on the basis of the movement of the motor or the movable machine part and are output delayed by the delay time of the drive system behind the amounts of movement $P_{Xn}$ and $P_{Yn}$ obtained on the basis of the output signal from the distribution circuit 7; therefore, in order to remove the time difference between them, the differences are obtained between the outputs of the simulators 25 and 26 and the results of detection by the position detectors 15X and 15Y.

The controller 18 sequentially accumulates the amount of movement $P_{Xn}$ per unit time ΔT obtained by Eq. (8) or the amount of movement $P_{Yn}$ per unit time ΔT obtained by Eq. (9) and, when the accumulated value coincides with the coordinate value $X_C$, $Y_C$ of the X or Y coordinates of the point C, the controller makes its outputs to the simulators 25 and 26 zero and, at the same time, applies a control signal ST to the velocity calculation circuit 6, reducing the tangential velocity $V_T$ to zero. As a result of this, the outputs of the simulators 25 and 26 go to zero with a time function corresponding to the delay time of the drive system and the control signals of the velocities $V_X$ and $V_Y$ in the A-axis and the Y-axis direction from the coordinate transformation circuit 10 also become zero. When the contents of the registers 16 and 17 are reduced to zero by the outputs of the position detectors 15X and 15Y, the motors 14X and 14Y stop. Since this embodiment is arranged so that corrected velocity components $\Delta V_x$ and $\Delta V_y$ are generated according to the differences between the outputs of the simulators 25 and 26 and the results of detection by the position detectors 15X and 15Y as described above, the direction of feed does not deviate under the influence of the offset voltage or the like.

Moreover, by repeating the above-described operation the feed can be effected along a variable path, such, for instance, as indicated by

$$O \rightarrow C_1 \rightarrow C_2 \rightarrow C_3$$

in Fig. 4.

As has been described in the foregoing, in a system performing variable-direction tracing through using a combination tracer control-numerical control unit, the numerical control unit is provided with signal generating means for generating a signal indicating the angle of a feed path according to numerical information representing the path, such as the controller 18, and the tracer control unit is provided with a first coordinate transformation circuit for producing a displacement component signal in the direction of the feed path and a second coordinate transformation circuit for distributing, according to the signal from the signal generating means, a signal for controlling the feed rate of the feed path to signals for controlling the feed rates in the X-axis and the Y-axis, and the feed is controlled by the tracer control. Accordingly, the illustrated and described embodiment of the present invention has the advantages of increased cutting accuracy and speed over the conventional system which controls the feed by the numerical control.

## Claim

A copy control system for tracing the profile of a master model along a feed path (A) in a freely selectable direction (α) in an X—Y plane through the user of a tracer control unit which performs tracer control according to displacement signals ($\varepsilon_x$, $\varepsilon_y$, $\varepsilon_z$) from a tracer head (1) when tracing a model surface with a stylus (2) in order to cut a workpiece with a cutter, wherein the tracer control unit is provided with a first coordinate transformation circuit (8) for producing a displacement component signal relative to the model in the direction of the feed path (A) on the basis of displacement signals ($\varepsilon_x$, $\varepsilon_y$) of the stylus (2) from the tracer head (1) in the X-axis and the Y-axis and digital signals (sin α, cos α) indicating the direction (α) of the feed path (A), and with a second coordinate transformation circuit (10) for resolving, in accordance with said displacement component signal and with the digital signals (sin α, cos α) indicating the direction (α) of the feed path (A), a signal (Vα) for controlling the feed rate along the feed path (A) into signals ($V_x$, $V_y$) for controling drive means to determine the feed rates in the X-axis and the Y-axis;

characterised in that there is provided in combination with the tracer control unit a numerical control unit (18, 19, 20) operable to perform numerical control according to numerical information to cut the workpiece by the cutter, the numerical control unit being operable to define said freely selectable direction (α) by producing said angle-indicating signals (sin α, cos α) from the coordinates of any two consecutive digitised points defined on said plane and lying on said feed path (A), said numerical control unit comprising a controller (18) for calculating said angle-indicating signals (sin α, cos α), a memory (19), and a reader (20) operable to read a physical medium carrying numerical control information, wherein said numerical control information read by the reader (20) is to include the coordinates of said two consecutive points, the system further comprising position detectors (15X, 15Y) for detecting the actual positions along the X and Y axes, and wherein the controller (18) is coupled to receive the value of the control signal (Vα) for controlling the feed rate along the feed path (A) and is operable to calculate periodically, from the value of this signal (Vα) and from the elapsed time, the commanded positions along the X and Y axes; there being comparison means (16, 17) coupled to the position detectors (15X, 15Y) and to the controller (18) to receive the values of the actual and commanded positions and to calculate any error between them and to correct accordingly, the velocity control signals along the X and Y axes, said commanded positions being supplied to said comparison means (16, 17) via respective simulators (25, 26) having a time function corresponding to the delay time of the associated drive system, thereby to compensate for the delay in the actual values of the commanded positions caused by said delay time.

**Patentanspruch**

Kopiersteuersystem zum Verfolgen des Profils eines Originalmodells längs eines Vorschubpfads (A) in einer frei wählbaren Richtung (α) in einer X—Y-Ebene durch Benutzung einer Verfolgungssteuereinheit, die eine Verfolgungssteuerung entsprechend Abweichungssignalen ($\varepsilon_x$, $\varepsilon_y$, $\varepsilon_z$) aus einem Verfolgerkopf (1) ausführt, wenn eine Modelloberfläche mit einem Taststift (2) verfolgt wird, um ein Werkstück mit einer Schneidvorrichtung auszuschneiden, wobei die Verfolgungssteuereinheit versehen ist mit einer ersten Koordinatentransformationsschaltung (8) zum Erzeugen eines Abweichungskomponentensignals relativ zu dem Modell in der Richtung des Vorschubpfads (A) auf der Grundlage von Abweichungssignalen ($\varepsilon_x$, $\varepsilon_y$) des Taststifts (2) aus dem Verfolgerkopf (1) in der X-Achse und der Y-Achse und von digitalen Signalen (sin α, cos α), die die Richtung (α) des Vorschubpfads (A) bezeichnen, und mit einer zweiten Koordinatentransformationsschaltung (10) zum Zerlegen eines Signals (Vα) in Übereinstimmung mit dem Abweichungskomponentensignal und mit den digitalen Signalen (sin α, cos α), die die Richtung (α) des Vorschubpfads (A) bezeichnen, in Signale ($V_x$, $V_y$)

zum Steuern eines Antriebsmittels, um die Vorschubraten in der X-Achse und der Y-Achse zu bestimmen, dadurch gekennzeichnet, daß in Kombination mit der Verfolgungssteuereinheit eine numerische Steuereinheit (18, 19, 20) vorgesehen ist, die betreibbar ist, um eine numerische Steuerung entsprechend einer numerischen Information durchzuführen, um das Werkstück durch die Schneidvorrichtung auszuschneiden, wobei die numerische Steuereinheit betreibbar ist, um die frei wählbare Richtung (α) durch Erzeugen der winkelbezeichnenden Signal (sin α, cos α) aus den Koordinaten von zwei aufeinanderfolgenden digitalisierten Punkten, die in der Ebene definiert sind, und auf dem Verschubpfad (A) liegen, zu definieren, wobei die numerische Steuereinheit eine Steuereinrichtung (18) zum Berechnen der winkelbezeichnenden Signale (sin α, cos α), einen Speicher (19) und eine Leseeinrichtung (20) enthält, die betreibbar ist, um ein körperliches Medium, das numerische Steuerinformation trägt, auszulesen, wobei die numerische Steuerinformation, die durch die Leseeinrichtung (20) ausgelesen wird, die Koordinaten der zwei aufeinanderfolgenden Punkte enthält, welches System desweiteren enthält:

—Positionsdetektoren (15X, 15Y) zum Erfassen der Istpositionen längs der X- und der Y-Achse, wobei die Steuereinrichtung (18) angeschlossen ist, um den Wert des Steuersignals (Vα) zum Steuern der Vorschubrate längs des Vorschubpfads (A) zum empfangen, und betreibbar ist, um periodisch aus dem Wert dieses Signals (Vα) und aus der abgelaufenen Zeit die Sollpositionen längs der X- und der Y-Achse zu berechnen, und

—Vergleichsmittel (16, 17), die mit den Positionsdetektoren (15X, 15Y) und der Steuereinrichtung (18) zum Aufnehmen der Werte der Ist- und der Sollpositionen, zum Berechnen einer Abweichung zwischen diesen und zum entsprechenden Korrigieren der Steuersignale für die Geschwindigkeit längs der X- und der Y-Achse verbunden sind, wobei die Sollpositionen der Vergleichsmitteln (16, 17) über betreffende Simulatoren (25, 26) zugeführt werden, die eine Zeitfunktion entsprechend der Verzögerungszeit des zugeordneten Antriebssystems haben, um dadurch die Verzögerung der Istwerte der Sollpositionen, die durch die Verzögerungszeit verursacht wird, zu kompensieren.

**Revendication**

Un système de commande de copiage destiné à suivre le profil d'un modèle selon un chemin d'avance (A) orienté dans une direction (α) qu'on peut sélectionner librement, dans un plan X—Y, par l'utilisation d'une unité de commande de copiage qui effectue une commande de copiage conformément à des signaux de déplacement ($\varepsilon_x$, $\varepsilon_y$, $\varepsilon_z$) provenant d'un palpeur (11), lorsque celui-ci suit une surface de modèle avec une pointe de palpeur (2), dans le but d'effectuer des opérations de coupe sur une pièce à usiner, avec une fraise, dans lequel l'unité de commande de copiage comporte un premier circuit de transformation de coordonnées (8) destiné à produire un signal de composante de déplacement par rapport au modèle, dans la direction du chemin d'avance (A), sur la base de signaux de déplacement ($\varepsilon_x$, $\varepsilon_y$) de la pointe de palpeur (2), provenant du palpeur (1), pour l'axe X et l'axe Y, et de signaux numériques (sin α, cos α) indiquant la direction (α) du chemin d'avance (A), et un second circuit de transformation de coordonnées (10) qui, sous la dépendance du signal de composante de déplacement et des signaux numériques (sin α, cos α) indiquant la direction (α) du chemin d'avance (A), décompose un signal ($V_a$) pour la commande de la vitesse d'avance le long du chemin d'avance (A), pour donner des signaux ($V_x$, $V_y$) destinés à commander des moyens d'entraînement pour déterminer les vitesses d'avance pour l'axe X et l'axe Y;

caractérisé en ce qu'il existe, en combinaison avec l'unité de commande de copiage, une unité de commande numérique (18, 19, 20) capable d'accomplir une commande numérique conformément à une information de commande numérique, pour effectuer des opérations de coupe sur la pièce à usiner, au moyen de la fraise, l'unité de commande numérique pouvant fonctionner de façon à définir la direction (α) qui peut être sélectionnée librement, en produisant les signaux d'indication d'angle (sin α, cos α), à partir des coordonnées de deux points numérisés consécutifs quelconques qui sont définis dans le plan précité et qui se trouvent sur le chemin d'avance (A), cette unité de commande numérique comprenant un dispositif de commande (18) destiné à calculer les signaux d'indication d'angle (sin α, cos α), une mémoire (19), un lecteur (20) capable de lire un support physique qui porte une information de commande numérique, l'information de commande numérique qui est lue par lecteur (20) contenant les coordonnées des deux points consécutifs précités, le système comprenant en outre des détecteurs de position (15X, 15Y) destinés à détecter les positions réelles le long des axes X et Y, et le dispositif de commande (18) étant connecté de façon à recevoir la valeur du signal de commande ($V_a$) pour commander la vitesse d'avance le long du chemin d'avance (A) et pouvant fonctionner de façon à calculer périodiquement, à partir de la valeur de ce signal ($V_a$) et du temps écoulé, les positions commandées le long des axes X et Y; et des moyens de comparaison (16, 17) qui sont connectés aux détecteurs de position (15X, 15Y) et au dispositif de commande (18), pour recevoir les valeurs des positions réelles et commandées, et pour calculer toute erreur entre elles, et pour corriger en conséquence les signaux de commande de vitesse selon les axes X et Y, les positions commandées étant transmises aux moyens de comparaison (16, 17) par l'intermédiaire de simulateurs respectifs (25, 26) qui ont une caractéristique temporelle qui correspond à la durée de retard du système d'attaque associé, pour compenser ainsi le retard dans les valeurs réelles des positions commandées, qui résulte de la durée de retard précitée.

Fig. 1

Fig. 2

Fig. 3

Fig. 4

3